# EUROPEAN PATENT SPECIFICATION

(11) **EP 2 561 194 B1**
(45) Date of publication and mention of the grant of the patent: **24.07.2019**
(21) Application number: 11772322.1
(22) Date of filing: 18.04.2011
(51) Int. Cl.: F01N 3/20, B60W 40/06, F01N 9/00, F02D 41/06

(54) **METHOD AND SYSTEM PERTAINING TO CONTROL OF ADDITIVE SUPPLY IN A VEHICLE EXHAUST DISCHARGE SYSTEM**
VERFAHREN UND SYSTEM ZUR STEUERUNG EINER ADDITIFZUFUHR IN EINEM ABGASAUSPUFFSSYSTEM FÜR EIN FAHRZEUG
PROCÉDÉ ET SYSTÈME POUR COMMANDER UNE ALIMENTATION EN ADDITIF DANS UN SYSTÈME D'ÉVACUATION DES GAZ D'ÉCHAPPEMENT DE VÉHICULE

(30) Priority: 21.04.2010 SE 1050395
(43) Date of publication of application: 27.02.2013
(73) Proprietor: Scania CV AB, 151 87 Södertälje (SE)
(72) Inventor: LUNDSTRÖM, Mikael, S-126 28 Hägersten (SE)
(74) Representative: Scania CV AB
(86) International application number: PCT/SE2011/050470
(87) International publication number: WO 2011/133092

(56) References cited:
- EP-A1- 0 859 132
- WO-A1-01/25606
- WO-A1-2008/139813
- WO-A1-2009/025775
- DE-A1-102004 005 072
- JP-A- 2000 240 431
- US-A1- 2010 043 404

## Description

### Field of the invention

The present invention relates to exhaust cleaning systems of vehicles and in particular to a method for supply of additive to a catalytic exhaust cleaning process according to the preamble of claim 1. The invention relates also to a system and a vehicle.

### Background to the invention

Growing official concern about pollutants and air quality, especially in urban areas, has lead to the adoption of emission standards and rules in many jurisdictions.

Such emission standards often set requirements which define acceptable limits for exhaust discharges from vehicles equipped with combustion engines. These standards often regulate, for example, levels of discharge of nitrogen oxides (NOₓ), hydrocarbons (HC), carbon monoxide (CO) and particles from most types of vehicles. Requirements with regard to heavy vehicles may for example be expressed in terms of permissible amounts of emissions (measured in grams) per kWh of engine power output.

The endeavour to meet such emission standards has led to ongoing research in many fields, one such field being post-treatment (cleaning) of the exhaust gases which arise from combustion in a combustion engine.

A commonly applied way to post-treat exhaust gases from a combustion engine is a so-called catalytic cleaning process, so vehicles equipped with a combustion engine are usually also provided with at least one catalyst. There are various types of catalysts, since different types may be required for different fuels and/or to clean different types of exhaust components, and heavy vehicles are often provided with a catalyst to deal with at least nitrogen oxides NOₓ (nitrogen oxide and nitrogen dioxide) by supplying an additive to the exhaust flow arising from the engine's combustion, in order to reduce nitrogen oxides NOₓ (substantially to nitrogen gas and water vapour).

A commonly used type of catalyst, particularly in heavy vehicles, is SCR (selective catalytic reduction) catalysts. SCR catalysts use ammonia (NH₃), or a compound from which ammonia can be generated/formed, as additive for reduction of nitrogen oxides NOₓ. The additive is injected, upstream of a catalyst, into the exhaust flow arising from the engine.

The ratio between discharges of nitrogen oxides NOₓ from a combustion engine and the fuel consumption of the engine is inversely proportional. This means that if the engine is set to operate with greater efficiency (its efficiency being influenced by, for example, injection angles and injection times and fuel/air mixture) and hence with lower fuel consumption, which is desirable from an economic perspective, the combustion process results in greater discharges of nitrogen oxides, with consequently greater requirements for subsequent exhaust cleaning.

The additive supplied to the catalyst is adsorbed (stored) in the catalyst, whereupon nitrogen oxides in the exhaust gases react with the ammonia stored in the catalyst. However, the catalyst's storage capacity will usually vary greatly with the temperature prevailing in the catalyst. At lower temperatures larger amounts of ammonia can be stored, whereas the storage capacity at higher temperatures is smaller.

A sudden temperature rise in the catalyst, e.g. due to increased engine load, with consequently higher temperature for the exhaust flow, may therefore mean that stored additive is released and is discharged into the vehicle's surroundings via the exhaust pipe. However, such additive/ammonia discharges are undesirable, and in many cases discharges of this type are also subject to official regulations which also set highest permissible levels for additive discharges.

US 2005/0166580 A1 shows a method for regenerating an exhaust aftertreatment system, in particular a particulate filter.

An optimised regeneration of the exhaust aftertreatment system is achieved by supplying information relating to the travel route to a control device and controlling the regeneration cycles taking the information into consideration.

US 2010/0043404 A1 shows a method for managing an exhaust aftertreatment system where production of ammonia in a TWC (Three-Way Catalytic converter) or an LNT (Lean NOₓ Trap) can be predicted, which allows for use of an SCR catalyst without having to store a supply of urea or other source of ammonia.

WO2009/025775 shows control of an SCR system having a filtering device.

EP 0 859 132 A1 shows an exhaust emission control apparatus for an internal combustion engine.

In short, there is a need for an improved method, for control of supply of additive to a catalyst, which overcomes or at least mitigates disadvantages of existing solutions.

### Summary of the invention

An object of the present invention is to propose a method which solves the above problem. This object is achieved by a method according to the characterising part of claim 1.

The present invention relates to a method for supply of additive to a catalytic exhaust cleaning process for cleaning an exhaust flow from a combustion engine of a vehicle, which vehicle has means for control of supply of additive to said exhaust flow. The method comprises estimating an expected temperature situation for said exhaust cleaning process, on the basis of a representation of the vehicle's running surface, and controlling said supply of additive on the basis of said estimated temperature situation.

This affords the advantage that the amount of additive supplied to the catalytic exhaust cleaning process can be adjusted according to the temperature expected. The exhaust cleaning process usually takes place in an SCR catalyst, in which additive is stored in order to react subsequently with substances such as nitrogen oxides in the exhaust flow. Such storage is usually temperature-dependent, and it is possible, by control of supply of additive on the basis of expected temperature, for supply of additive to be controlled to an optimum level.

This means that at low catalyst temperatures it is possible to store large amounts of additive, allowing the engine to run more fuel-economisingly (with greater release of nitrogen oxides as above) without risk of undesirable discharge of additive.

Temperature increase in the catalyst normally results in substantial risk of undesirable ammonia discharge if the catalyst's storage capacity is largely occupied at the time when the temperature increase occurs. The present invention makes it possible for the storage of additive to be kept substantially as high as current catalyst temperature allows, while at the same time allowing the level to be adjusted according to expected temperature changes, with the consequent possibility of avoiding undesirable additive discharges.

The expected temperature situation of the catalyst may be determined by determining an expected temperature situation for said exhaust flow.

The expected temperature situation of the exhaust flow may also be determined by using said representation of the vehicle's running surface to estimate the expected load upon the engine, thereby making it possible to determine also the expected temperature situation of the exhaust flow.

The representation of the vehicle's running surface may for example take the form of data concerning a gradient of its current running surface, the gradient of the road ahead and/or data concerning the topography of the road ahead. For example, the vehicle's current location may be used in conjunction with said data concerning the topography of the road ahead to determine an expected temperature situation for a first period of time, e.g. the next x seconds, where x may be any number between 5 and 600. The range may with advantage be 30 seconds or more, since such a time margin is long enough to allow plenty of scope for resetting from a first level to a lower second or higher third level when the catalyst temperature is expected to increase or decrease.

The amount of additive for supply to the exhaust flow as above may also depend on, for example, the vehicle's weight. If for example its weight is lower because of being unladen, a smaller temperature increase is to be expected from increased engine load than if the vehicle was laden.

Resetting from a lower level of stored additive to a higher level may be effected by increasing the supply of additive.

Resetting from a higher level of stored additive to a lower level may be effected by decreasing the supply of additive and/or by taking one or more corrective measures as below.

When it is determined that a temperature increase is on the way, the amount of additive supplied may be progressively lowered, e.g. as a function of time, so that the amount of stored additive decreases.

Resetting the catalyst from more storage to less storage may also have to be effected quickly, possibly by halting the supply of additive completely, whereupon exhaust gases flowing through will consume stored ammonia. The resetting process may where necessary be speeded up further by resetting of injection times, injection angles and/or length of injection periods and/or numbers of injections for the engine so that a larger amount of nitrogen oxides is generated and is therefore supplied to the exhaust flow, whereupon stored ammonia will be consumed at a faster rate because of the higher concentration of nitrogen oxides in the exhaust gases.

The rate of temperature increase, e.g. when the vehicle reaches an upgrade, may also be lowered by temporarily switching off one or more of the ancillaries with which the engine is usually provided and which, when in operation, load the engine and thereby raise the temperature of the exhaust flow.

Further characteristics of the present invention and advantages thereof are indicated by the detailed description set out below of embodiment examples and the attached drawings.

### Brief description of the drawings

Fig. 1a depicts a power train in a vehicle in which the present invention may with advantage be used.
Fig. 1b depicts an example of a control unit in a vehicle control system.
Fig. 2 depicts an example of a post-treatment system in a vehicle in which the present invention may with advantage be used.
Fig. 3 depicts the reaction rate for chemical reactions in a vehicle catalyst as a function of the catalyst's temperature.
Fig. 4 depicts schematically the ability of a catalyst to store additive as a function of temperature.
Fig. 5 is a schematic flowchart according to an example of a process according to the present invention.
Fig. 6 is a flowchart according to another example of a process according to the present invention.

### Detailed description of preferred embodiments

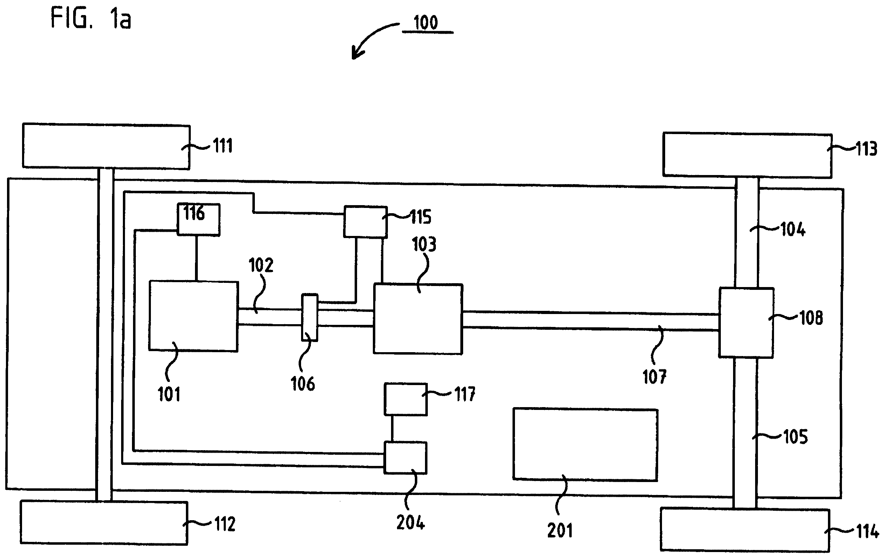

Fig. 1a depicts schematically a heavy vehicle 100, e.g. a truck, bus or the like, according to an example of an embodiment of the present invention. The vehicle 100 schematically depicted in Fig. 1a has a pair of forward wheels 111, 112 and a pair of powered rear wheels 113, 114 (the invention is also applicable to vehicles which have more than one axle provided with powered wheels, and vehicles with more than one rear axle). The vehicle further comprises a power train with a combustion engine 101 which is connected in a conventional way, via an output shaft 102 of the engine 101, to a gearbox 103, e.g. via a clutch 106.

An output shaft 107 from the gearbox 103 drives the powered wheels 113, 114 via a final gear 108, e.g. a conventional differential, and drive shafts 104, 105 which are connected to said final gear 108.

The vehicle 100 further has a post-treatment system to treat exhaust discharges from the engine 101. The post-treatment may be any of the various types in which additive is supplied to a catalytic exhaust cleaning process. The post-treatment system incorporates an SCR (selective catalytic reduction) catalyst 201. The post-treatment system may also comprise further undepicted components, e.g. further catalysts and/or particle filters, situated upstream and/or downstream of the SCR catalyst 201.

As mentioned above, an SCR catalyst is a post-treatment system which requires additive in order to reduce the concentration of nitrogen oxides in the exhaust gases from the engine. This additive is often urea-based and may for example take the form of AdBlue, which in principle comprises urea diluted with water. Upon temperature rise, urea forms ammonia.

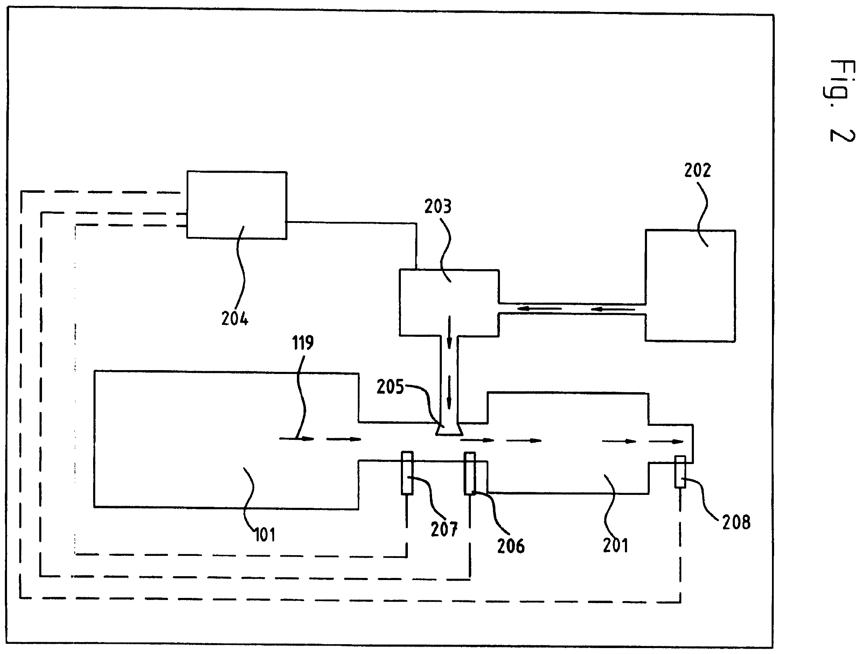

The post-treatment system is depicted in more detail in Fig. 2 and comprises not only said catalyst 201 but also a urea tank 202 which is connected to a urea dosing system (UDS) 203.

The UDS system 203 has, or is controlled by, a UDS control unit 204 which generates control signals for control of supply of additive so that desired amounts are injected from the tank 202, by means of an injection nozzle 205 upstream of the catalyst 201, into the exhaust flow 119 arising from the combustion in the cylinders of the engine 101.

UDS systems are generally well described in prior art, so there is no further description here of exactly how injection of additive is effected, as the present invention is primarily concerned with a way of calculating suitable amounts of additive for supply to the exhaust flow which makes it possible for actual injection of amounts calculated according to the invention to be effected accordingly.

Control systems in modern vehicles usually further comprise a communication bus system consisting of one or more communication buses for connecting together a number of electronic control units (ECUs), or controllers, and various components located on the vehicle. Such a control system may comprise a large number of control units, and the responsibility for a specific function may be divided among two or more of them.

For the sake of simplicity, Fig. 1a depicts, apart from the control unit 204, only three further electronic control units 115, 116, 117. In this embodiment, the control unit 116 controls the engine 101, and the control unit 115 controls the clutch 106 and the gearbox 103 (two or more from among engine, gearbox and clutch may alternatively be arranged to be controlled by one and the same control unit or by undepicted other control units). The control unit 117 is responsible for a so-called look-ahead function described in more detail below.

Control units of the type referred to are normally arranged to receive sensor signals from various parts of the vehicle, e.g. gearbox, engine, clutch and/or other control units or components of the vehicle, such as the exhaust temperature sensor 206 depicted in Fig. 2. The control signals generated by control units normally depend both on signals from other control units and on signals from components. For example, the control exercised by the control unit 204 over supply of additive to the exhaust flow 119 will depend on, for example, information received from, for example, one or more further control units. For example, the control may be at least partly based on information from the control unit 117 which is responsible for the look-ahead function and/or the control unit 115 which is responsible for the function of the gearbox 103, and from the control unit or units which control clutch and/or engine functions, e.g. the control unit 116.

The control units are further arranged to deliver control signals to various parts and components of the vehicle, e.g. to means for control of the injection nozzle 205, in order to control them. The present invention may be implemented in any of the above control units, or in some other suitable control unit in the vehicle's control system.

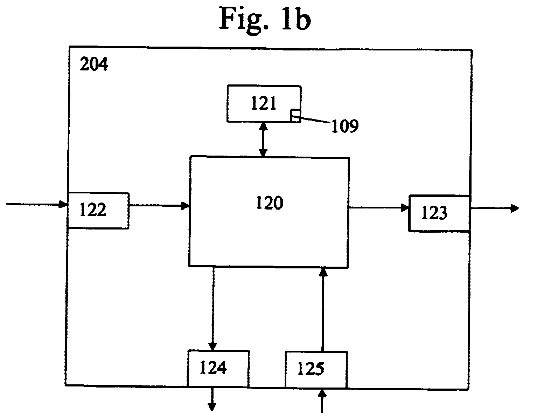

The control is often governed by programmed instructions. These programmed instructions take typically the form of a computer programme which, when executed in a computer or control unit, causes the computer/control unit to effect desired forms of control action, e.g. method steps according to the present invention. The computer programme usually takes the form of a computer programme product 109 which is stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in combination with or in the control unit, and which is executed by the control unit. The vehicle's behaviour in a specific situation can thus be adjusted by altering the computer programme's instructions.

An example of a control unit (the control unit 204) is depicted schematically in Fig. 1b, which control unit 204 may in its turn comprise a calculation unit 120 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit 120 needs in order to be able to perform calculations. The calculation unit 120 is also arranged to store partial or final results of calculations in the memory unit 121.

The control unit 204 is further provided with respective devices 122, 123, 124, 125 for receiving and sending input and output signals. These input and output signals may comprise waveforms, pulses or other attributes which the input signal receiving devices 122, 125 can detect as information and which can be converted to signals processable by the calculation unit 120. These signals are thereafter conveyed to the calculation unit 120. The output signal sending devices 123, 124 are arranged to convert signals received from the calculation unit 120 in order, e.g. by modulating them, to create output signals which can be conveyed to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, a MOST (Media Orientated Systems Transport) bus or some other bus configuration, or a wireless connection.

As mentioned above, the injection nozzle 205 is situated upstream of the catalyst 201, which means that the additive is supplied to the exhaust flow before it passes through the catalyst 201. As also previously mentioned, urea is usually supplied in the form of an aqueous solution which, when added to the warm exhaust flow, vaporises, disintegrates, and forms ammonia. It is then this ammonia which serves as active substance in the chemical reaction in the catalyst 201, which constitutes the actual cleaning process.

The ammonia formed accompanies the exhaust flow into the catalyst 201, in which the ammonia molecules are adsorbed on (become attached to) surfaces in the catalyst 201. The catalyst 201 often comprises a large number of lamellae intended to provide a substantial total surface to which the ammonia molecules can become attached. When thereafter nitrogen oxides NOₓ (in this description and the claims set out below nitrogen oxides NOₓ comprise both nitrogen monoxide NO and nitrogen dioxide NO₂) pass through the catalyst, nitrogen oxide molecules react with the ammonia molecules adsorbed in the catalyst.

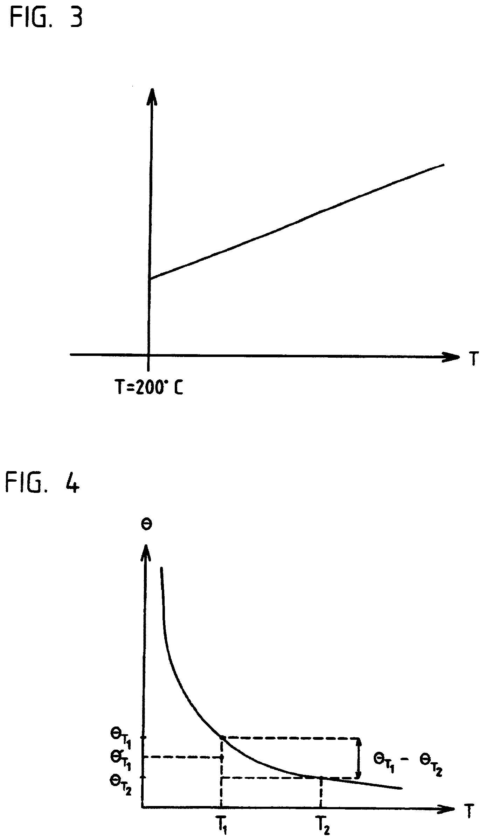

The catalyst has to maintain at least a minimum temperature if the catalytic cleaning process is to take place at all. In the case of an SCR catalyst, urea only begins to vaporise at 200ºC, which means that the reaction in the catalyst will be very limited at lower temperatures. This is exemplified in Fig. 3, which illustrates how the reaction rate of the reactions in the desired catalytic cleaning process varies with the temperature T in the catalyst. The origin point of the graph represents T=200ºC and, as may be seen in the diagram, substantially no reaction takes place at temperatures below 200ºC, and the reactions at higher temperatures are very temperature-dependent. From the reaction rate point of view, a high catalyst temperature is therefore desirable.

As well as the concentration of nitrogen oxides NOₓ in the exhaust gases varying over time, e.g. depending on the current operating situation, the capacity of the catalyst to store ammonia also varies with temperature.

This is illustrated in Fig. 4, which illustrates how the catalyst's ability θ to store ammonia depends on the catalyst temperature T. At lower catalyst temperatures, the catalyst's ability to store ammonia is greater than at higher temperatures. The catalyst's storage capacity θ may for example represent the amount of additive, e.g. in grams, which can be adsorbed by the catalyst. As may be seen in the diagram, this storage capacity is large at low temperatures (here again the origin point represents T=200ºC) but declines exponentially with increasing catalyst temperature T. This means that if, when the catalyst's storage capacity is fully utilised, its temperature increases from a temperature T₁ to a temperature T₂, it will at this latter temperature be overstocked, with the result that the difference in storage capacity, i.e. θ_{T1}-θ_{T2}, cannot be retained by the catalyst but will be released from it and run out through the vehicle's exhaust pipe.

Temperature increase in the catalyst thus entails a substantial risk of undesirable ammonia discharges if the amount stored in the catalyst is large. As previously mentioned, like nitrogen oxides NOₓ, ammonia emissions are also governed by official regulations in many cases, so such discharges are undesirable both environmentally and regulatorily.

A commonly applied way of avoiding undesirable ammonia discharges is therefore to store lower levels of ammonia than are actually possible, in order thereby to diminish the risk that undesirable amounts of ammonia might be released when sudden temperature rises in the catalyst occur. This means, for example, that what is stored at a temperature T₁ is not the amount θ_{T1} but a smaller amount θ_{T1}.

The amount of ammonia needed in the catalyst is directly proportional to the amount of nitrogen oxides in the exhaust gases. Large amounts of nitrogen oxides require a large amount of ammonia to enable reduction of nitrogen oxides to take place in as optimum a way as possible.

One ammonia molecule is required for each nitrogen oxide NOₓ molecule if the desired reduction in the catalyst is to be achieved. For the catalyst process to be effective, the concentration of ammonia, and hence also the amount of urea dosage, has therefore to be sufficient to match the concentration of nitrogen oxides NOₓ in the exhaust gases.

This means that a decrease in the amount of ammonia supplied for storage at a certain temperature results in a corresponding decrease in the reduction of nitrogen oxides NOₓ in the exhaust flow. For example, the storage of ammonia may be controlled to a level θ' which causes, for example, a 90% reduction, i.e. 90% of the nitrogen oxides NOₓ present in the exhaust flow being converted to nitrogen gas and water vapour instead of, for example, a 98% reduction which would be possible if the risk of sudden temperature rises as above was disregarded.

However, the present invention proposes a method and a system which make it possible to allow more storage of ammonia in the catalyst while at the same time decreasing the risk of undesirable ammonia discharges.

The present invention achieves this by using a representation of the running surface (the road) on which the vehicle is travelling as a basis for estimating how the temperature of the catalytic exhaust cleaning will change over time. The temperature of the catalytic exhaust cleaning may for example be estimated by estimating how the temperature of the exhaust flow arising from the engine at which the temperature of the catalyst is altered by the exhaust flow passing through it will change in, for example, the next 10, 20, 30 or 60 seconds, on the basis of a representation of the vehicle's running surface.

Injection of additive can thus be matched with expected catalyst temperature situations in such a way that the risk of undesirable ammonia discharges can be diminished, since the amount of storage can be decreased when a higher temperature is expected. At the same time, the invention makes it possible for more storage of ammonia in the catalyst to be allowed in situations where the temperature is expected to be substantially constant, with no substantial temperature increases, thereby enhancing the effectiveness of SCR catalyst use.

In accordance with a first embodiment example, data about the road ahead are used to determine a representation of the vehicle's running surface. For example, data from a look-ahead (LA) function may be used to determine a representation of the vehicle's running surface.

The LA function may for example comprise a road gradient database provided in the vehicle, either for all of the roads within a geographical area, e.g. a region, country, continent etc., or for the road sections along which the vehicle is normally driven. Combining these data with the vehicle's location, which is obtainable for example via a GPS receiver, makes it possible for the vehicle's control system to know the nature of the road ahead and then use these data in various ways, e.g. for cruise control functions.

The LA function makes it possible, for example, to determine whether the vehicle is approaching climbs which will result in more load upon the engine and consequently higher exhaust temperatures.

Alternatively, instead of being stored in a database in the vehicle, road gradient data may be arranged to be sent to the vehicle continuously or at certain intervals via some suitable wireless link, in which case data transmitted may for example be controlled by the vehicle's location at the time.

In addition to topographical information, road data may also comprise information about speed limits, road bends etc. These data may also be used according to the present invention so that, for example, increased engine load due to acceleration when the permissible vehicle speed increases can be taken into account in determining the amount of additive for supply to the exhaust flow.

In the present example, the LA function is implemented via the control unit 117, and data from it can be sent to the control unit 204 (or some other suitable control unit) for use in estimating the temperature of the exhaust flow and the amount of additive for supply to the exhaust flow.

According to an embodiment example of the present invention, data about the road ahead of the vehicle are used, with or without other vehicle data, to estimate how hard the engine will work, e.g. for the next 30-60 seconds (or a shorter or longer period such as from any number of seconds within the range 1-5 to any number of seconds within the range 5-1000 seconds), along with the further possibility of estimating the change in the temperature of the exhaust flow generated by the engine within said period.

It is thus possible, by means of the LA function, for the control unit 204 to, for example, determine in good time before a coming climb, with consequent increase in the amount of driving power needed, that there will soon be a need for an increase in the amount of driving power, and also to calculate relatively accurately the temperature which the exhaust flow will reach, along with the further possibility of estimating the warming of the catalyst and hence being able to control additive injection on the basis of the estimated temperature situation.

Similarly, even before the crest of a hill, at a point where there is a relatively large need for driving power, the control unit can already use data from said LA function to determine that there soon will be less need for driving power, with consequent lowering of the temperature of the exhaust flow, making it possible for increased injection of additive to begin at an optimum time for best possible utilisation of the catalyst cleaning.

The information obtained by means of the LA function may be used not only to predict that the vehicle will run in a relatively static way with no substantial temperature increases, but also to predict when substantial temperature increases are to be expected.

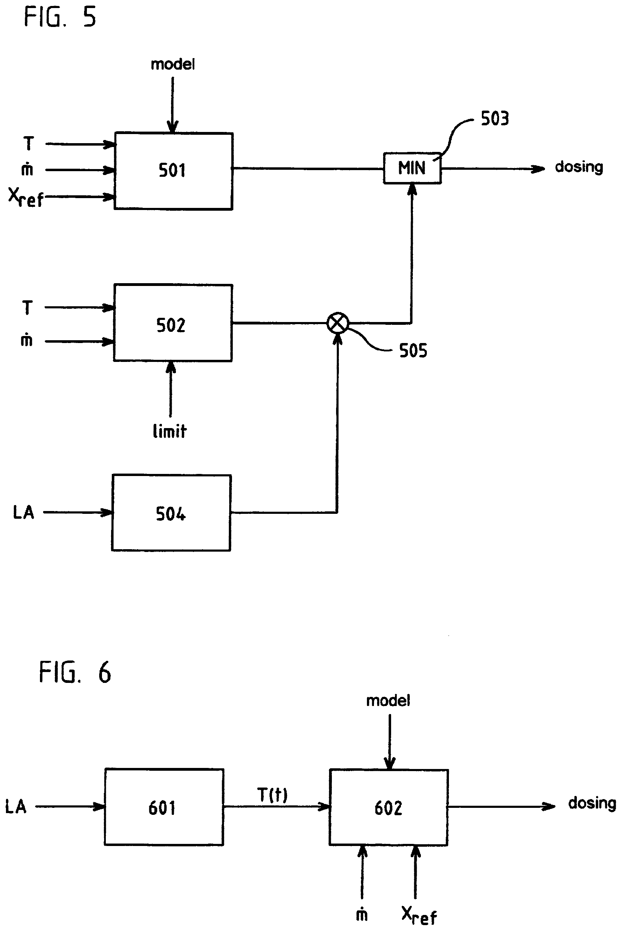

Fig. 5 illustrates a regulating procedure according to an embodiment example of the present invention. Step 501 determines a theoretical value representing the maximum amount of additive which can be injected into the exhaust flow and which substantially can at the same time also be stored in the catalyst. This determination may be by means of a model of the catalyst in which the model input data comprise:
- prevailing temperature T in the catalyst and/or in the exhaust flow upstream of the catalyst, which may for example be measured by the temperature sensor 206 depicted in Fig. 2,
- amount of exhaust flow, which may for example be measured by means of an air mass measuring device 207, and
- a reference value X_{ref} representing a desired degree of reduction, e.g. the maximum possible degree of reduction, which may for example be 98% but might also be higher or lower depending on, for example, the configuration of the catalyst. The catalyst model may for example take the form of a mathematical description or one or more tables of additive amounts for different values of a suitable number of combinations of input signal values, e.g. various different temperatures and various different flows. The table may also comprise such combinations for various different reference values.

This amount value thus represents the theoretically most optimum value for supply of additive, but also the situation which involves risk of discharge of very large amounts of ammonia when temperature increases occur. Step 502 therefore determines a limit value, e.g. 90 or 92% of the urea dosage which is theoretically possible according to the catalyst model. All this is as described above in relation to Fig. 4. Prior art then takes a step 503 which compares the respective values determined at steps 501 and 502 and adopts the smaller of them as the value for subsequent dosing via the injection nozzle/dosing nozzle 205. The limitation introduced at step 502 thus means that in practice the dosage will always be lowered to the level indicated at step 502.

In contrast, in suitable situations, the present invention applies a step 504 to overcome the limitation set at step 502. Step 504 estimates an expected temperature situation on the basis of a representation of the vehicle's running surface, in this example on the basis of LA/GPS information, making it possible to determine whether the vehicle will, e.g. for the next 25-30 seconds, travel statically (i.e. on a substantially flat running surface) or downhill, in which case no exhaust temperature increase is to be expected and more storage of ammonia in the catalyst can therefore be allowed without risk of sudden discharges due to temperature increases.

The determination effected at step 504 serves as a basis for generating a value which may for example vary between 1 and a suitably large or very large value, a large value being set if no temperature increase is to be expected, and the value determined is multiplied at step 505 by that determined at step 502, whereupon the result arrived at at step 505 is supplied to the selector 503. When no temperature increase is to be expected, the parameter determined at step 504 may be used to convert the value arrived at at step 502, which is therefore normally lower than the value generated at step 501, to a value which is guaranteed to exceed the value arrived at at step 501, making it possible to effect optimum urea dosage according to step 501 if no temperature increase is likely.

The determination at step 504 may be effected continuously and may also generate a parameter which changes as a function of time f(t). Thus the parameter generated at step 504 may be used not only to choose between the respective values calculated at steps 501 and 502 but also to choose any value between them.

When it is determined that a temperature increase is on the way, the parameter generated at step 504 may be lowered, e.g. progressively as a function of time, so that the maximum possible storage limit takes effect again, decreasing urea injection and hence too the storage of ammonia. A catalyst of the type here concerned normally has a certain inherent inertia which means that it may for example take 15-30 seconds for the storage of ammonia to decrease to a desired level. If the prevailing temperature is low and the amount stored at the time is therefore large, it may take even longer, e.g. as long as a minute, to reset the storage capacity to the new higher temperature expected.

The point in time at which resetting of the catalyst commences may therefore depend on the prevailing temperature at the time and also on the temperature which the catalyst is expected to reach within a certain time. However, an LA function may be used to make an estimate for a relatively long period, making it possible for adjustment to different temperature levels to take place in good time and in the most effective way.

The temperature which the catalyst is expected to reach may be determined by estimating how much the engine will work. This determination may be based on, for example, the length/gradient of a climb ahead. An LA-based solution thus affords the advantage of allowing the nature of the vehicle's running surface to be determined for a relatively long distance, along with the possibility of very good regulation of urea dosage.

The parameter generated at step 504 may be used to lower the storage progressively to a desired level by progressively decreasing the value of the parameter.

There are various possible ways of resetting the catalyst from more storage to less storage. For example, the urea dosage may be shut off completely, in which case exhaust gases flowing through will consume stored ammonia. The resetting process may where necessary be speeded up by resetting the engine's injection angles so that a larger amount of nitrogen oxides is generated and is therefore added to the exhaust flow, in which case stored ammonia will be consumed at a faster rate owing to the higher concentration of nitrogen oxides in the exhaust gases.

Fig. 6 depicts an alternative embodiment of the present invention. Step 601 calculates exhaust temperature/catalyst temperature as a function of time on the basis of LA data. This representation of the temperature is then passed to a step 602 which corresponds to step 501 above and which uses the estimated temperature in conjunction with the catalyst model to continually calculate optimum amounts of additive supply on the basis of expected temperatures, making it possible for values determined to cater for and be adjusted according to coming temperature increases/decreases.

It may also be advantageous to incorporate the vehicle's equipment weight and running resistance in the above calculations, since these parameters may affect how much the engine has to work and hence the exhaust temperature which will be reached. These data are normally already available in the vehicle's control system, e.g. for use by the gearbox control unit 115 when changing gear, and they can therefore be supplied to the control unit 204 from the control unit 115.

Moreover, the invention is described above in relation to a look-ahead (LA) solution whereby the vehicle's location is described together with altitude information about the road ahead.

However, the present invention is also applicable to vehicles which have no such LA information. An alternative way of determining a representation of the vehicle's running surface is to determine a road gradient, which may for example be obtained by means of a gradient sensor. This road gradient is then used, preferably in conjunction with information about the vehicle's equipment weight and running resistance, to estimate catalyst temperature changes. These data are normally already available, at least in the case of a vehicle with automatic gear changing, in its control system, since they are used by the gearbox control unit to enable it to effect gear changes without jerking or undesirable wear in the power train.

The running resistance is a total representation of the resultant of the forces acting upon the vehicle during operation and may be calculated from knowledge of the vehicle's speed, the engine's driving torque, the vehicle's configuration and other relevant data.

The running resistance may also be used as a representation of the road gradient.

Alternatively, the gradient of the vehicle's running surface may be determined by means, for example, of any from among inclinometer, accelerometer or gyro.

On the basis of the representation of the running surface in the form of running surface gradient, these data make it possible to estimate an engine power output offtake and also to estimate the temperature in the catalyst. This solution makes it possible to use a slower form of regulation whereby the limitation introduced at step 502 can for example be overcome in situations such as when the engine load has been the same for a certain time, e.g. 30 or 60 seconds, in which case the vehicle may be regarded as being on a relatively uniform section of road, before the parameter at step 504 is set to a value which causes injection of a larger amount of additive.

This solution means that a shorter resetting time to decrease the amount of stored additive is available when the running resistance increases, in which case the resetting may entail having to shut the urea dosage off completely while at the same time injection angles are reset so that large amounts of nitrogen oxides are generated and are supplied to the exhaust flow for faster consumption of ammonia and consequently less risk of undesirable ammonia discharges when the temperature rise occurs.

Vehicles of the above type may further comprise one or more ancillaries driven by the engine, e.g. AC compressors, air compressors, fans etc. The vehicle may also have external ancillaries powered by the engine via power take-offs e.g. cooling units in refrigeration vehicles. When a temperature rise is on the way, such ancillaries may, if possible, be switched off to reduce the engine load and therefore diminish the magnitude of the temperature rise, making it possible to decrease the risk of undesirable discharges when resetting the storage capacity of the catalyst.

Thus the present invention makes more storage of additive possible while also allowing the engine to generate a corresponding increase in nitrogen oxides, with consequently lower fuel consumption.

It is also possible for an NOₓ sensor 208 to be provided on the exhaust flow leaving the catalyst, i.e. downstream of the catalyst, in order to provide measurements of the exhaust content after cleaning. For example, the NOₓ sensor 208 may be used to enable the vehicle's control system to detect faults/malfunctions in the post-treatment system. The NOₓ sensor 208 may also be used to verify that additive supplied has desired effects.

A factor which may affect the determination of amounts of additive for supply to the exhaust flow as above is the vehicle's weight. For example, if through being unladen the vehicle has a relatively low weight, the limitation introduced at step 502 may be overcome because the relatively low weight results in lower exhaust temperatures, since the load upon the engine need not be as great as, for example, in the case of a heavily laden vehicle.

## Claims

1. A method for supply of additive to a catalytic exhaust cleaning process for cleaning of an exhaust flow (119) from a combustion engine (101) of a vehicle (100), which vehicle (100) comprises control means (204) for control of supply of said additive to said exhaust flow (119), said additive at least partly taking the form of urea and/or ammonia, and said vehicle (100) further comprising a catalyst, said catalyst taking the form of an SCR catalyst (201), and said catalytic exhaust cleaning process being effected by means of said catalyst (201), **characterised in that** said method comprises:
- estimating an expected temperature situation for said exhaust cleaning process, on the basis of a representation of the vehicle's (100) running surface,
- controlling said supply of additive on the basis of said estimated temperature situation, and,
- when the amount of additive for supply to said exhaust cleaning process is set to a first level, lowering of the amount of additive supplied to a second level which is lower than said first level, when an increased temperature for said exhaust cleaning process is expected.

2. A method according to claim 1, in which said expected temperature situation for said exhaust cleaning process serves as an expected temperature situation for said exhaust flow (119) .

3. A method according to claim 1 or 2, further comprising estimation of the engine's (101) expected load on the basis of said representation of the vehicle's (100) running surface, said expected temperature situation for said exhaust cleaning process being estimated on the basis of said engine load.

4. A method according to any one of the foregoing claims, further comprising, when the amount of additive for supply to said exhaust cleaning process is set to a first level, increasing the amount of additive supplied to a third level which is higher than said first level, when a decreased temperature for said exhaust cleaning process is expected.

5. A method according to any one of the foregoing claims, in which said first level represents a desired degree of reduction of at least one substance in said exhaust flow (119) .

6. A method according to claim 5, in which said substance takes the form of nitrogen oxides NOₓ.

7. A method according to any one of the foregoing claims, in which a decrease in the amount of additive supplied begins when an increased temperature for said exhaust cleaning process is expected within a first period of time.

8. A method according to any one of the foregoing claims, in which a decrease in the amount of additive supplied begins when said estimated temperature exceeds a first value.

9. A method according to any one of the foregoing claims, the method further comprising determining an expected temperature situation for said catalyst (201).

10. A method according to claim 9, in which said expected temperature situation for said catalyst (201) is determined on the basis of determining an expected temperature situation for said exhaust flow (119).

11. A method according to any one of the foregoing claims, in which said amount of additive for supply to said exhaust cleaning process is determined at least partly on the basis of a model of said catalyst (201).

12. A method according to any one of the foregoing claims, in which said representation of the vehicle's (100) running surface takes the form of data concerning a gradient of the vehicle's (100) current running surface, the gradient of the road ahead of the vehicle (100), and/or data concerning the topography of the road ahead of the vehicle (100).

13. A method according to claim 12, in which a gradient of the vehicle's (100) current running surface is determined by means of control signals to and/or from the engine (101), and/or on the basis of the vehicle's (100) running resistance.

14. A method according to any one of the foregoing claims, which further comprises effecting said determination when said vehicle (100) is in motion.

15. A method according to any one of the foregoing claims, in which resetting the catalyst (201) from more storage to less storage is effected of one or more of the following:
- decreasing or shutting off supply of additive,
- resetting of injection times, injection angles and/or length of injection periods and/or number of injections for said combustion engine (101).

16. A computer program which comprises program code and which, when said program code is executed in a computer, causes said computer to apply the method according to any one of claims 1-15.

17. A computer program product (109) comprising a computer-readable medium (121) and a computer program according to claim 16, which computer program is contained in said computer-readable medium (121).

18. A vehicle (100) comprising a system for supply of additive to a catalytic exhaust cleaning process for cleaning of an exhaust flow (119) from a combustion engine (101)of a vehicle (100) which vehicle (100) comprises control means (204) for control of supply of said additive to said exhaust flow (119), said additive at least partly taking the form of urea and/or ammonia, and said vehicle (100) further comprising a catalyst, said catalyst taking the form of an SCR catalyst (201), and said catalytic exhaust cleaning process being effected by means of said catalyst (201), **characterised in that** the system comprises:
- means (204;115;116;117) for estimating an expected temperature situation for said exhaust cleaning process on the basis of a representation of the vehicle's (100) running surface,
- means (204;205;115;116;117) for controlling said supply of additive on the basis of said estimated temperature situation, and,
- means (204;205;115;116;117) for, when the amount of additive for supply to said exhaust cleaning process is set to a first level, lowering of the amount of additive supplied to a second level which is lower than said first level, when an increased temperature for said exhaust cleaning process is expected.

## Patentansprüche

1. Verfahren zur Zufuhr eines Additivs zu einem katalytischen Abgasreinigungsprozess zum Reinigen eines Abgasstroms (119) aus einem Verbrennungsmotor (101) eines Fahrzeugs (100), wobei das Fahrzeug (100) eine Steuereinrichtung (204) zur Steuerung einer Zufuhr des Additivs in den Abgasstrom (119) aufweist, wobei das Additiv zumindest teilweise die Form von Harnstoff und/oder Ammoniak hat, und das Fahrzeug (100) ferner einen Katalysator aufweist, wobei der Katalysator als ein SCR-Katalysator (201) ausgestaltet ist und der katalytische Abgasreinigungsprozess mittels des Katalysators (201) durchgeführt wird, **dadurch gekennzeichnet, dass** das Verfahren umfasst:
- Abschätzen eines erwarteten Temperaturzustandes für den Abgasreinigungsprozess basierend auf einer Darstellung der Fahrfläche des Fahrzeugs (100),
- Steuern der Additivzufuhr basierend auf dem abgeschätzten Temperaturzustand, und
- wenn die Additivmenge zur Zufuhr zu dem Abgasreinigungsprozess auf ein erstes Niveau eingestellt ist, Verringern der zugeführten Additivmenge auf ein zweites Niveau, das niedriger ist als das erste Niveau, wenn eine erhöhte Temperatur für den Abgasreinigungsprozess erwartet wird.

2. Verfahren nach Anspruch 1, bei dem der erwartete Temperaturzustand für den Abgasreinigungsprozess als ein erwarteter Temperaturzustand für den Abgasstrom (119) dient.

3. Verfahren nach Anspruch 1 oder 2, ferner umfassend eine Abschätzung der erwarteten Last des Motors (101) basierend auf der Darstellung der Fahrfläche des Fahrzeugs (100), wobei der erwartete Temperaturzustand für den Abgasreinigungsprozess basierend auf der Motorlast abgeschätzt wird.

4. Verfahren nach einem der vorhergehenden Ansprüche, ferner umfassend, wenn die Additivmenge zur Zufuhr zu dem Abgasreinigungsprozess auf ein erstes Niveau eingestellt ist, Erhöhen der zugeführten Additivmenge auf ein drittes Niveau, das höher ist als das erste Niveau, wenn eine verringerte Temperatur für den Abgasreinigungsprozess erwartet wird.

5. Verfahren nach einem der vorhergehenden Ansprüche, bei dem das erste Niveau einen gewünschten Reduzierungsgrad zumindest einer Substanz in dem Abgasstrom (119) repräsentiert.

6. Verfahren nach Anspruch 5, bei dem die Substanz die Form von Stickoxiden NOₓ annimmt.

7. Verfahren nach einem der vorhergehenden Ansprüche, bei dem eine Verringerung der zugeführten Additivmenge beginnt, wenn eine erhöhte Temperatur für den Abgasreinigungsprozess innerhalb einer ersten Zeitdauer erwartet wird.

8. Verfahren nach einem der vorhergehenden Ansprüche, bei dem eine Verringerung der zugeführten Additivmenge beginnt, wenn die abgeschätzte Temperatur einen ersten Wert übersteigt.

9. Verfahren nach einem der vorhergehenden Ansprüche, wobei das Verfahren ferner ein Ermitteln eines erwarteten Temperaturzustandes für den Katalysator (201) umfasst.

10. Verfahren nach Anspruch 9, bei dem der erwartete Temperaturzustand für den Katalysator (201) ermittelt wird basierend auf einem Ermitteln eines erwarteten Temperaturzustandes für den Abgasstrom (119).

11. Verfahren nach einem der vorhergehenden Ansprüche, bei dem die Additivmenge zur Zufuhr zu dem Abgasreinigungsprozess zumindest teilweise basierend auf einem Modell des Katalysators (201) festgelegt wird.

12. Verfahren nach einem der vorhergehenden Ansprüche, bei dem die Darstellung der Fahrfläche des Fahrzeugs (100) die Form von Daten betreffend eine Neigung der aktuellen Fahrfläche des Fahrzeugs (100), wobei die Neigung die Straße vor dem Fahrzeug (100) ist, und/oder von Daten betreffend die Topographie der vor dem Fahrzeug (100) befindlichen Straße annimmt.

13. Verfahren nach Anspruch 12, bei dem eine Neigung der aktuellen Fahrfläche des Fahrzeugs (100) mittels Steuersignalen zu und/oder von dem Motor (101) und/oder basierend auf einem Fahrwiderstand des Fahrzeugs (100) ermittelt wird.

14. Verfahren nach einem der vorhergehenden Ansprüche, welches ferner umfasst ein Ausführen der Ermittlung, wenn sich das Fahrzeug (100) in Bewegung befindet.

15. Verfahren nach einem der vorhergehenden Ansprüche, bei dem eine Umstellung des Katalysators (201) von mehr Speicherung auf weniger Speicherung erreicht wird durch eines oder mehrere der folgenden:
- Verringern oder Abstellen einer Additivzufuhr;
- Umstellen von Einspritzzeiten, Einspritzwinkeln und/oder einer Dauer von Einspritzperioden und/oder einer Anzahl von Einspritzungen für den Verbrennungsmotor (101).

16. Computerprogramm, welches einen Programmcode umfasst und welches, wenn der Programmcode in einem Computer ausgeführt wird, den Computer dazu veranlasst, das Verfahren nach einem der Ansprüche 1 bis 15 anzuwenden.

17. Computerprogrammprodukt (109) mit einem computerlesbaren Medium (121) und einem Computerprogramm nach Anspruch 16, wobei das Computerprogramm in dem computerlesbaren Medium (121) enthalten ist.

18. Fahrzeug (100) mit einem System zur Zufuhr eines Additivs zu einem katalytischen Abgasreinigungsprozess zum Reinigen eines Abgasstroms (119) von einem Verbrennungsmotor (101) eines Fahrzeugs (100), wobei das Fahrzeug (100) eine Steuereinrichtung (204) zur Steuerung einer Zufuhr des Additivs in den Abgasstrom (119) umfasst,
wobei das Additiv zumindest teilweise die Form von Harnstoff und/oder Ammoniak hat, und das Fahrzeug (100) ferner einen Katalysator aufweist, wobei der Katalysator als ein SCR-Katalysator (201) ausgestaltet ist und der katalytische Abgasreinigungsprozess mittels des Katalysators (201) ausgeführt wird, **dadurch gekennzeichnet, dass** das System aufweist:
- eine Einrichtung (204; 115; 116; 117) zum Abschätzen eines erwarteten Temperaturzustandes für den Abgasreinigungsprozess basierend auf einer Darstellung der Fahrfläche des Fahrzeugs (100),
- eine Einrichtung (204; 205; 115; 116; 117) zum Steuern der Additivzufuhr basierend auf dem abgeschätzten Temperaturzustand, und
- eine Einrichtung (204; 205; 115; 116; 117) zum, wenn die Additivmenge zur Zufuhr zu dem Abgasreinigungsprozess auf ein erstes Niveau eingestellt ist, Verringern der zugeführten Additivmenge auf ein zweites Niveau, das geringer ist als das erste Niveau, wenn eine erhöhte Temperatur für den Abgasreinigungsprozess erwartet wird.

## Revendications

1. Procédé pour l'a fourniture d'un additif à un processus catalytique d'épuration d'échappement pour l'épuration d'un flux d'échappement (119) d'un moteur à combustion (101) d'un véhicule (100), lequel véhicule (100) comprenant des moyens de contrôle (204) pour le contrôle de la fourniture dudit additif audit flux d'échappement (119), ledit additif prenant au moins partiellement la forme d'urée et/ou d'ammoniaque, et ledit véhicule (100) comprenant, en outre, un catalyseur prenant la forme d'un catalyseur RCS (201), et ledit processus catalytique d'épuration d'échappement étant effectué au moyen dudit catalyseur (201), **caractérisé en ce que** le procédé comprend :
- l'estimation d'une condition de température attendue pour ledit processus d'épuration d'échappement, sur la base d'une représentation de la surface de roulement du véhicule (100) ,
- le contrôle de ladite fourniture d'un additif sur la base de ladite condition de température estimée, et,
- lorsque la quantité d'additif à fournir audit processus d'épuration d'échappement est réglé à un premier niveau, la réduction de la quantité d'additif fournit à un deuxième niveau qui est inférieur audit premier niveau lorsqu'une augmentation de température est attendue pour ledit processus d'épuration d'échappement.

2. Procédé selon la revendication 1, dans lequel ladite condition de température attendue pour ledit processus d'épuration d'échappement sert de condition de température attendue pour ledit flux d'échappement (119).

3. Procédé selon la revendication 1 ou 2 comprenant, en outre, l'estimation de la charge attendue du moteur (101) sur la base de ladite représentation de la surface de roulement du véhicule (100), ladite condition de température attendue pour ledit processus d'épuration d'échappement étant estimée sur la base de ladite charge de moteur.

4. Procédé selon l'une quelconque des revendications précédentes, comprenant, en outre, lorsque la quantité d'additif à fournir audit processus d'épuration d'échappement est réglé à un premier niveau, l'augmentation de la quantité d'additif fournie à un troisième niveau qui est supérieur audit premier niveau, lorsqu'une réduction de température est attendue pour ledit processus d'épuration d'échappement.

5. Procédé selon l'une quelconque des revendications précédentes, dans lequel ledit premier niveau représente un degré de réduction souhaité pour au moins une substance dans ledit flux d'échappement (119).

6. Procédé selon la revendication 5, dans lequel ladite substance prend la forme d'oxydes d'azote NOₓ.

7. Procédé selon l'une quelconque des revendications précédentes, dans lequel une réduction de la quantité d'additif fournie commence lorsqu'une réduction de température pour ledit processus d'épuration d'échappement est attendue dans une première période de temps.

8. Procédé selon l'une quelconque des revendications précédentes, dans lequel une réduction de la quantité d'additif fournie commence lorsque ladite température estimée dépasse une première valeur.

9. Procédé selon l'une quelconque des revendications précédentes, le procédé comprenant, en outre, la détermination d'une condition de température attendue pour ledit catalyseur (201) .

10. Procédé selon la revendication 9, dans lequel ladite condition de température attendue pour ledit catalyseur (201) est déterminée sur la base de la détermination d'une condition de température attendue pour ledit flux d'échappement (119).

11. Procédé selon l'une quelconque des revendications précédentes, dans lequel ladite quantité d'additif à fournir audit processus d'épuration d'échappement est déterminée au moins en partie sur la base d'un modèle dudit catalyseur (201).

12. Procédé selon l'une quelconque des revendications précédentes, dans lequel ladite représentation de la surface de roulement du véhicule (100) prend la forme de données concernant une déclivité de la surface de roulement actuelle du véhicule (100), de la déclivité de la route en avant du véhicule (100) et/ou des données concernant la topographie de la route en avant du véhicule (100).

13. Procédé selon la revendication 12, dans lequel une déclivité de la surface de roulement actuelle du véhicule (100) est déterminée au moyen de signaux de contrôle vers le et/ou du moteur (101), et/ou sur la base de la résistance à l'avancement du véhicule (100).

14. Procédé selon l'une quelconque des revendications précédentes, lequel comprend en outre la réalisation de ladite détermination lorsque ledit véhicule (100) est en mouvement.

15. Procédé selon l'une quelconque des revendications précédentes, dans lequel la réconfiguration du catalyseur (201) de plus de capacité de stockage à moins de capacité de stockage est effectuée par une ou plusieurs des actions suivantes :
- la réduction ou la coupure de la fourniture d'additif,
- la réconfiguration des temps d'injection, des angles d'injection et/ou de la durée des périodes d'injections et/ou du nombre d'injections pour ledit moteur à combustion (101).

16. Programme informatique qui comprend un code de programme et qui, lorsque ledit code de programme est exécuté dans un ordinateur, amène ledit ordinateur à mettre en oeuvre le procédé selon l'une quelconque des revendications 1-15.

17. Produit de programme informatique (109) comprenant un support lisible par ordinateur (121) et un programme informatique selon la revendication 16, lequel programme informatique étant installé dans ledit support lisible par ordinateur (121).

18. Véhicule (100) comprenant un système de fourniture d'additif à un processus catalytique d'épuration d'échappement pour l'épuration d'un flux d'échappement (119) d'un moteur à combustion (101) d'un véhicule (100), lequel véhicule (100) comprend des moyens de contrôle (204) pour le contrôle de la fourniture dudit additif audit flux d'échappement (119), ledit additif prenant au moins partiellement la forme d'urée et/ou d'ammoniaque, et ledit véhicule (100) comprenant, en outre, un catalyseur, ledit catalyseur prenant la forme d'un catalyseur RCS (201), et ledit processus catalytique d'épuration d'échappement étant effectué au moyen dudit catalyseur (201), **caractérisé en ce que** le système comprend :
- des moyens (204 ; 115 ; 116 ; 117) pour l'estimation d'une condition
de température attendue pour ledit processus d'épuration d'échappement, sur la base d'une représentation de la surface de roulement du véhicule (100),
- des moyens (204 ; 205 ; 115 ; 116 ; 117) pour le contrôle de ladite fourniture d'un additif sur la base de ladite condition de température estimée, et,
- des moyens (204 ; 205 ; 115 ; 116 ; 117) pour, lorsque la quantité d'additif à fournir audit processus d'épuration d'échappement est réglé à un premier niveau, la réduction de la quantité d'additif fournit à un deuxième niveau qui est inférieur audit premier niveau lorsqu'une augmentation de température est attendue pour ledit processus d'épuration d'échappement.
